# EUROPÄISCHE PATENTSCHRIFT

(11) **EP 0 826 141 B1**
(45) Veröffentlichungstag und Bekanntmachung des Hinweises auf die Patenterteilung: **13.10.1999**
(21) Anmeldenummer: 96914092.0
(22) Anmeldetag: 14.05.1996
(51) Int. Cl.: G01N 1/04

(54) **KOLLEKTOR ZUR AUFNAHME VON PARTIKELN**
PARTICLE COLLECTOR
COLLECTEUR DE PARTICULES

(30) Priorität: 15.05.1995 DE 19517086
(43) Veröffentlichungstag der Anmeldung: 04.03.1998
(73) Patentinhaber: Labuda, Winfried, 23611 Bad Schwartau (DE)
(72) Erfinder: Labuda, Winfried, 23611 Bad Schwartau (DE)
(74) Vertreter: Pfenning, Meinig & Partner
(86) Internationale Anmeldenummer: DE9600879
(87) Internationale Veröffentlichungsnummer: WO9636865

(56) Entgegenhaltungen:
- EP-A- 0 319 438
- FR-A- 1 535 675
- GB-A- 586 826
- GB-A- 1 475 366
- US-A- 3 074 276
- US-A- 3 897 688
- US-A- 4 103 553
- PATENT ABSTRACTS OF JAPAN vol. 016, no. 179 (P-1345), 28.April 1992 & JP,A,04 019539 (KASUGA DENKI KK), 23.Januar 1992,
- PATENT ABSTRACTS OF JAPAN vol. 018, no. 090 (M-1560), 15.Februar 1994 & JP,A,05 296272 (SHIGEHIDE TAKAYANAGI), 9.November 1993,

## Beschreibung

Die Erfindung betrifft einen Kollektor zur flächigen Entnahme von Materialteilchen, die als Belag auf Oberflächen vorhanden sind und die im Anschluß an die Abnahme von den Oberflächen einer Analyse unterzogen werden sollen. Solche Materialteile sind beispielsweise Partikel, Fasern bzw. Fragmente davon, Materialabrieb, Stäube oder Sphären aus beliebigen Materialien. Es können aber auch Mikroben sein. Mit der Analyse sollen beispielsweise die spezifischen Verunreinigungen einer Fläche durch Teilchen, die Morphologie der Teilchen, die statistische Größenverteilung der Teilchen, morphologisch oder anderweitig klassifizierbare Teilchen oder verschiedenste stoffliche Qualitäten und Eigenschaften solcher Teilchen erfaßt werden.

Als Analyseverfahren können z.B. die elektronen-dispersive Röntgenanlyse (EDX) oder die Erfassung der radioaktiven Strahlung angewendet werden. Die Materialteilchen können aber auch anderen physikalischen, chemischen oder biologischen Analyseverfahren unterzogen werden.

Die Kenntnis der Verunreinigungs-Menge und Qualität von Oberflächen mit Partikeln oder anderen ähnlichen Teilen gewinnt an Bedeutung mit der zunehmenden Anzahl von industriellen Prozessen, die unter Reinraumbedingungen ablaufen müssen und im Bereich der Medizin und der Pharmazie erforderlich sind.

Bisher ist es üblich, den Reinheitsgrad durch verschiedene Verfahren zu bestimmen. Dabei wird einmal die Oberfläche mit reinen flüssigen Medien abgewaschen und der im flüssigen Medium enthaltene Inhalt analysiert.

Eine andere bisher verwendete Methode ist die direkte mikroskopische Betrachtung und Auswertung der betreffenden Oberfläche. Ein weiter bisher verwendetes Verfahren ist die sogenannte "tapelift"-Methode.

Die erstgenannte Methode hat insbesondere den Nachteil, daß nicht alle Oberflächen einer Behandlung mit einem flüssigen Medium räumlich zugänglich sind, und auch z.B. die verwendeten Materialien für das flüssige Medium empfindlich sind. Außerdem ist es nahezu unmöglich die Verunreinigungen auf einem definierten Oberflächenbereich zu erfassen, um beispielsweise den Verunreinigungsgrad vergleichend auswerten zu können.

Die Möglichkeit der Betrachtung der betreffenden Oberfläche mit einem Mikroskop ist selbstverständlich auch nicht generell möglich, sondern auf bestimmte Anwendungsfälle begrenzt, die insbesondere durch die Größe des jeweiligen Bauteiles bzw. Elementes, dessen Oberfläche bestimmt werden soll, eingeschränkt wird.

Um jedoch auch Oberflächen von Maschinen bzw. Anlagen bestimmen zu können, wird in Ergänzung die bereits erwähnte "tapelift"-Methode eingesetzt. Dabei wird ein einseitig mit einer adhäsiven Schicht versehener transparenter Film auf die zu untersuchende Oberfläche gedrückt und die Materialteilchen, wie beispielsweise Partikel, Faserfragmente, Materialabrieb oder Stäube werden mit dem Ziel der nachfolgenden Zählung und Klassifizierung durch geeignete, z.B. lichtmikroskopische Methoden von der Oberfläche abgenommen. Dabei wird die Folie mit der klebenden Seite von Hand mit den Fingern an die zu prüfende Oberfläche gepreßt. Durch den so zu erwartenden ungleichmäßigen Anpreßdruck über die auszuwertende Oberfläche der Folie ist der Teilchenabtrag von der Oberfläche, der an der adhäsiven Schicht gehalten wird, nicht repräsentativ und auch nicht gleichmäßig. Je nach Austrockungsgrad der Adhäsionsschicht, der Andruckdauer, der Andruckkraft, der Oberflächenrauhigkeit, der Abreißgeschwindigkeit und des Abreißwinkels des Filmes von der Probenfläche zeigen sich unterschiedliche Ergebnisse der Teilchenaufnahme von der Oberfläche.

Aus der US 4,103,553 ist eine Vorrichtung zur indirekten Überwachung der radioaktiven Kontamination von Oberflächen bekannt. Dort wird eine fahrbare Vorrichtung verwendet, bei der ein relativ komplizierter Aufbau verwendet und dabei ein austauschbares Filterpapier über die zu überwachende Oberfläche bewegt wird. Das Filterpapier wird mit Hilfe eines Vakuums an einem scheibenförmigen Element, in dem Bohrungen eingebracht sind, gehalten. Das mit dem Vakuum an dem scheibenförmigen Element gehaltene Filterpapier wird wiederum mit einer Feder, die im Gehäuse abgestützt ist, gegen die Oberfläche, die zu überwachen ist, gedrückt. Dabei wird die Anpreßkraft allein durch die Federkraft definiert.

Aus der US 3,074,276 ist ein Probenehmer bekannt, der in Anlehnung an die bereits bezeichnete "tapelift"-Methode arbeitet. Dabei wird ein austauschbares Klebefilmmaterial mit dem Finger einer Hand gegen eine Oberfläche gepreßt und Bakterien und radioaktive Partikel von dort abgenommen. Der Klebefilm ist auf einem scheibenförmigen Element befestigt, das in einem Gehäuse aufgenommen ist und mittels einer Feder vor und nach der Benutzung in das Innere des Gehäuses bewegt wird. Auch mit dieser Vorrichtung ist es nicht ohne weiteres möglich, eine definierte Anpreßkraft zu realisieren.

Ein mikrobiologischer Oberflächenprobenehmer ist in US 3,897,688 beschrieben. Mit dieser Vorrichtung sollen Proben von Oberflächen mechanisch und elektrostatisch genommen werden können. Zur Probenahme wird ein biokomatibles Material, wie z.B. Polytetrafluorethan vorgeschlagen.

Eine weitere Probenahmevorrichtung kann man dem Patent Abstracts of Japan, Vol. 016, No. 179 (P-1345), 28. April 1929 und JP-A-04 019539 entnehmen. Bei einer entsprechend ausgebildeten Vorrichtung sollen Proben flächig unter Verwendung einer elektrostatischen Aufladung genommen werden können, wobei eine stabförmige Elektrode über die zu messende Oberfläche geführt wird.

Es ist daher Aufgabe der Erfindung, eine Möglichkeit zu schaffen, Beläge von nahezu beliebigen Oberflächen in definierter Form aufzunehmen, so daß die Ergebnisse einer nachfolgenden Analyse in weit höherem Maße vergleich- und reproduzierbar sind.

Erfindungsgemäß wird diese Aufgabe durch die Merkmale des Anspruchs 1 gelöst. Vorteilhafte Ausgestaltungsformen und Weiterbildungen der Erfindung ergeben sich bei Verwendung der in den untergeordneten Ansprüchen enthaltenen Merkmale.

Der erfindungsgemäße Kollektor zur Aufnahme von Mikroben, Partikeln, Fasern, Stäuben, Abrieb, Sphären oder dergleichen aus beliebigen Materialien von Oberflächen verfügt dabei über eine Kollektorplatte, die zumindest an ihrer Oberfläche, für die Aufnahme der zu bestimmenden Beläge haftend ausgebildet ist. Die Kollektorplatte besteht vorteilhaft aus einem flexiblen Material, um sich an Gegebenheiten der Oberflächengeometrie anpassen zu können und wird in verschiedenen Größenklassen verwendet, um definierte Oberflächenbereiche beispielsweise mit Bezug auf den Verunreinigungsgrad klassifizieren zu können.

An der für die Aufnahme der Beläge gegenüberliegenden Seite der Kollektorplatte ist ein Federelement angeordnet und Federelement und Kollektorplatte sind in einem Gehäuse aufgenommen. Dabei ist das Federelement so ausgewählt und dimensioniert, daß die Kollektorplatte, mit der für die Aufnahme geeigneten Oberfläche über eine Aufsetzebene des Gehäuses hinausragt und dabei der Abstand zwischen Kollektorplatte und Aufsetzebene den möglichen Federweg vorgibt, so daß wenn die Kollektorplatte gegen die Federkraft des Federelementes auf die zu bestimmende Oberfläche gepreßt wird, definierte und reproduzierbare Bedingungen eingehalten werden. Dies betrifft in erster Linie die Anpreßkraft, mit der die Kollektorplatte gegen die Oberfläche gedrückt wird.

Kollektorplatte und Federelement sind in einem Gehäuse, das beispielsweise eine verschließbare Kapsel aus Metall oder Kunststoff sein kann, gehalten. Bevorzugt ist das Federelement mittig in einer Aufnahme des Gehäuses verklebt oder mechanisch befestigt. Das Federelement kann aus einem Elastomer gebildet sein, dessen Federungsverhalten, insbesondere in bezug auf die Kraft-Weg-Beziehung, bekannt ist. Bei Verwendung eines Elastomer-Elementes ist es günstig, die Aufnahme im Gehäuse so zu gestalten, daß im Bereich des Federelementes ein Ausdehnungsschacht vorhanden ist, der die Möglichkeit des peripheren Ausweichens des Elastomermaterials, während des Anpressens der Kollektorplatte gegen die Oberfläche ohne Behinderung ermöglicht, und so die Anpreßkraft mit der die Kollektorplatte gegen die Oberfläche gedrückt wird, immer gleich ist.

Als Federelement können aber auch Spiralfedern, aus Kunststoff oder Metall, aber auch andere geeignete Elemente, die eine definierte Anpreßkraft der Kollektorplatte vorgeben, eingesetzt werden.

Die zur Aufnahme für die Belagteilchen von der Oberfläche vorgesehene Fläche der Kollektorplatte ist bevorzugt mit dem Federelement so verbunden, daß die Anpreßkraft gleichmäßig über die gesamte Aufnahmefläche wirkt. Diese Oberfläche der Kollektorplatte muß dabei eine Klebkraft aufweisen, um eine ausreichende Menge an Materialteilchen beim Andrücken mit der definierten Andruck-Kraft von der zu analysierenden Oberfläche abnehmen zu können. Prinzipiell kann hierfür jede im geeigneten Maße haftende weiche Platte oder Folie eingesetzt werden. Vorteilhaft kann dazu auch ein Gel, ein Agar, eine Knetmasse, ein Silikongummi oder eine Kunststoffplatte oder Folie dienen, wobei letztere auch als Elektret ausgebildet sein können. Dabei erlaubt das Gel eine die van der WaalsKräfte lösende Wirkung in strukturelle OberflächenTiefen hinein.

Der Agar erlaubt die Lebendhaltung von Mikroben nach Abnahme, die Knetmasse ist von Vorteil für die Anpassung an Oberflächen mit größeren Unebenheiten, das Silikongummi hinterläßt wenig Rückstände auf der geprüften Oberfläche. Das gilt auch für weiche Platten oder Folien aus Kunststoffen. Sind diese als Elektret ausgebildet, so ergibt sich eine zusätzliche elektrische, für die Teilchenbindung förderliche Wirkung.

Günstig ist es jedoch, Kollektorplatten zu verwenden, die aus einem Material bestehen, das mit seinen chemisch-physikalischen Eigenschaften die Möglichkeit erschließt, ein inherentes Reservoir für das Haftungsmittel, das gute Haftungseigenschaften für kleine Materialteilchen hat, zu bilden. Hierfür können beispielsweise Platten aus hochplastifiziertem Polyvinylchlorid verwendet werden. In das Polyvinylchlorid wird das Haftmittel, bevorzugt ein Glykolester, ein monomerisches Ester oder ein C₄ bis C₁₄-monohydrischer Alkohol sowie viskosimetrische Modifikatoren, z.B. Porzellanerde, feine Silikate, Aluminium-Stearat, Lithium-Staearat oder hydriertes Rizinusöl, eingelagert und das Ganze mittels einer Wärmebehandlung bei mindestens +160°C verfestigt. Die so ausgebildete Kollektorplatte besteht dabei aus 10 bis 50 Gew.% Polyviniylchlorid und 50 bis 90 Gew.% eines als Haftmittel dienenden Plastifizierungsmittels und in besonders vorteilhafter Form aus 25 bis 45 Gew.% Polyviniylchlorid und 55 bis 75 Gew.% des als Haftmittel dienenden Plastifizierungsmittels. Diese Kollektorplatten weisen den Vorteil auf, daß sie auch nach langer Lagerzeit keine Beeinträchtigung der Klebkraft aufweisen. Die Oberfläche der so ausgebildeten Kollektorplatten ist stets mit einer dünnen Schicht des als Haftmittel dienenden Plastifizierungsmittels mit entsprechend guten Klebeeigenschaften bedeckt.

Ein weiterer Vorteil, den diese Kollektorplatten aufweisen, ist der, daß nach einem Einsatz eine Reinigung der Oberfläche der Kollektorplatte durchführbar ist und im Anschluß daran neues Plastifizierungsmittel auf dem Wege der Diffusion zur Oberfläche gelangt und der erfindungsgemäße Kollektor wieder einsetzbar ist.

Zur Verhinderung der Diffusion des als Haftmittel verwendeten Plastifizierungsmittels aus der Kollektorplatte in das aus einem Elastomer bestehenden Federelement hinein kann zwischen beiden eine Sperrschicht oder Sperrplatte, die bevorzugt aus Polyurethan besteht, angeordnet werden.

Das Gehäuse ist beispielsweise mit einer Abdeckkappe verschließbar, so daß insbesondere die Kollektorplatte gegenüber Umwelteinflüssen vor und auch nach der Probennahme bis zur Analyse geschützt untergebracht ist.

Durch die Ausbildung des Federelementes und insbesondere das Vorsehen eines Ausdehnungsschachtes im Gehäuse ist es möglich, eine gleichmäßige Anpreßkraft der Kollektorplatte gegen die Oberfläche zu bewirken.

Die Anpreßkraft ist bei gleichen Federelementen durch den vorgegebenen möglichen Federweg, welcher durch die Aufsetzebene begrenzt wird, nahezu konstant, und somit sind auch die Übergangsbedingungen für die Teilchen von der Oberfläche zum Kollektor hin relativ konstant und die Ergebnisse reproduzier- und vergleichbar. Das Federelement und die Kollektorplatte werden in Verbindung mit der Ausbildung des Gehäuses so gestaltet, daß eine Anpreßkraft z.B. von 5 N zwischen der Kollektorplatte und der zu bewertenden Oberfläche eingehalten wird. Bei dieser Größenordnung der Anpreßkraft können bei fast glatten Oberflächen nahezu alle Materialteilchen (über 90 % der Partikel > 0,5 µm) an die Kollektorplatte gebunden werden.

Die mit dem erfindungsgemäß ausgebildeten Kollektor aufgenommenen Beläge können im Anschluß an die Aufnahme mit den verschiedensten Analysearten ausgewertet werden.

Ein weiterer Vorteil des Kollektors nach der Erfindung ist der, daß er sehr robust ausgebildet ist und demzufolge unter rauhen Einsatzbedingungen nahezu in fast allen Anwendungsfällen eingesetzt werden kann. Durch die Verschließbarkeit werden Umwelteinflüsse sowohl vor der Probennahme als auch beim Transport zum Analyselabor hin ausgeschlossen. Dabei kann der verschlossene Kollektor ganz einfach ohne zusätzlichen Aufwand und Sicherheitsmaßnahmen an den Analyseort versendet werden. Für die Kennzeichnung der Probe werden entsprechende Signierungen, z.B. mit Haftetiketten, am Gehäuse vorgenommen.

Die Wiederverwendbarkeit ist auch dann gegeben, wenn Kollektorplatten verwendet werden, die nur an ihrer Oberfläche mit einem Hartmittel versehen sind. Dabei kann dann entweder die gesamte Kollektorplatte ausgetauscht oder nach einer Reinigung der Oberfläche und Auftrag neuen Haftmittels ein neuer Einsatz durchgeführt werden. Es können verschiedene bekannte Klebemittel als Haftmittel vorteilhaft eingesetzt werden. Besonders vorteilhaft sind solche, die durch geringere Oberflächenspannungen insbesondere kleinere Belagteile aufnehmen.

Für die Aufnahme von Mikroben eignet sich insbesondere Agar als Material für die Kollektorplatte, das gleichzeitig als Nährstoff während des Transportes zur Analyse dient, und so können auch lebende Zellen aufgenommen und später nachgewiesen werden.

Die Kollektorplatten können aber auch vorteilhaft aus einem Gel, einer Knetmasse, einer plastischen Masse oder Silikongummi bestehen, wobei es diese Materialien ermöglichen, daß sie sich besser an die verschiedenen Oberflächen, von denen die Proben genommen werden sollen, anpassen können. Die Kollektorplatte kann aber auch aus einem Material bestehen, das zumindest teilweise aus einem Elektret besteht, dessen elektrisches Feld für die Aufnahme der Beläge ausgenutzt werden kann.

Es kann aber auch ein elektrisches Feld erzeugt werden, um die Haftwirkung der Kollektorplatte zu bewirken bzw. zu verbessern.

Nachfolgend soll die Erfindung an einem Ausführungsbeispiel näher beschrieben werden.

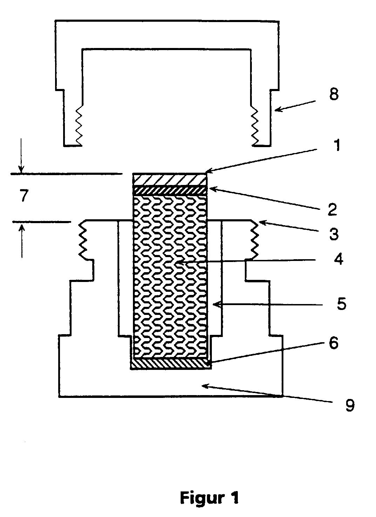

Dabei zeigt die einzige Figur einen erfindungsgemäß ausgebildeten Kollektor in einer Schnittdarstellung.

Bei dem in der Figur gezeigten Kollektor besteht die Kollektorplatte 1 z.B aus einem Kunststoff-Laminat, wie dem blauen partikelbindenden Fußbodenbelag der britischen Firma DYCEM, der bereits kommerziell verfügbar ist und als staubbindender Fußbodenbelag in Krankenhäusern und Reinräumen verwendet wird. Gemäß der nachstehenden Beschreibung läßt sich das Kunststoff-Laminat jedoch problemlos fertigen, falls das DYCEM-Produkt nicht verfügbar ist. Das Material besteht zu 25 - 55 Gew.% aus Polyvinylchlorid und zu 45 - 75 Gew.% aus einem Sekundär-Plastifizierungsmittel für Polyvinylchlorid. Solche Plastifizierungsmittel migrieren im Gegensatz zu den primären Plastifizierungsmitteln im Polyvinylchlorid relativ ungehindert, so daß sie auch an dessen Oberfläche gelangen, die dann mit einer entsprechend ausgebildeten dünnen klebenden Schicht bedeckt ist. Wird die Oberfläche gereinigt und werden die aufgenommenen anhaftenden Beläge mit einer entsprechenden geringen Menge des Plastifizierungsmittels entfernt, wird die Wiederverwendbarkeit ohne weiteres dadurch gesichert, daß durch die freie Beweglichkeit des im Polyvinylchlorid gespeicherten Plastifizierungsmittels ein Ausdiffundieren bis zur Oberfläche auftritt und eine neue dünne Schicht des als Haftmittel dienenden Plastifizierungsmittels ausgebildet wird.

Beispiele für solche Plastifizierungsmittel sind Glykolester dibasischer geradkettiger Säuren, monomerische Ester dibasischer Säuren und C₄-C₁₄-monohydrische Alkohole. Hochmolekulare Plastifizierungsmittel des Molekulargewichtsbereiches 750 ... 1250 und monomerische Plastifizierungsmittel sind gleichermaßen verwendbar, aber wegen deren geringerer Flüchtigkeit ist der Einsatz der hochmolekularen Typen eher empfehlenswert (z.B. Poly(propylen-glykol-adipat) oder Poly(1,3-butan-diol-azelat). Ein Beispiel für solch ein Plastifizierungsmittel ist z.B. das Produkt Wolflex 828 der britischen Firma Victor Wolf Ltd. oder ein entsprechend geeigneter Nachfolgetyp desselben oder ein vergleichbares Produkt anderer Hersteller.

Günstig ist es, dem Polyvinylchlorid als weiteren Zusatz viskosimetrische Modifikatoren zuzugeben. Beispielsweise werden 68 Gew.% Plastifizierungsmittel, 31 Gew.% bereits viskosimetrisch modifiziertes Polyvinylchlorid und 1 Gew.% Phtalo-evanin-blau oder Schwarzkohle in eine geeignete Mischapparatur gegeben und ausreichend lange vermischt, bis eine innige Vermischung stattgefunden hat. Das Gemisch wird in eine Gießform gebracht und in dieser bei einer Umgebungstemperatur von mindestens +160°C so lange in einem geeigneten Ofen belassen, bis das Material seine endliche Vernetzung gefunden hat. Die viskosimetrische Modifizierung des Polyvinylchlorids erfolgt, um das Plastisol pseudoplastisch und/oder thixotropisch einzustellen und somit eine fertigungstechnisch günstige Verminderung der Viskosität der Verbindung während des Temperierens zu verhindern. Dies geschieht durch Zugabe von Modifikatoren wie feine Silikate (z.B. ein Produkt der Marke "Aerosil"), hydriertes Rizinusöl oder Porzellanerde, Aluminium-Stearat oder Lithium-Stearat. Der prozentuale Gewichtsanteil bei Einsatz feiner Silikate beträgt 0,5 ... 7 % und wurde fertigungsgemäß auf 4,2 % eingestellt. Anschließend wird die so geformte Platte mit einer weiteren Platte aus Polyurethan durch Kleben mittels eines Polyurethan-Klebers (z.B. der britischen Marke "Bostic 2064") flächig verbunden. Als weitere Plattenmaterialien eignen sich auch Polychloroprene oder modifizierte Polyolefine.

Zur Verbesserung der mikroskopischen Auswertbarkeit kann das Kollektorplattenmaterial mit Pigmenten eingefärbt sein, wobei eine dunkle Tönung, z.B. in den Farben schwarz oder tiefblau, bei einer mikroskopischen Betrachtung ein relativ hohes Bild-Kontrastverhältnis ergibt, so daß die mikroskopische Erkennbarkeit der einzelnen Teilchen der aufgenommenen Beläge deutlich verbessert wird.

Das Material des beschriebenen partikelbindenden Fußbodenbelages besteht aus drei Lagen, wobei die textile unterste Lage für den erfindungsgemäßen Zweck nicht erforderlich ist. Das Material wird während 2 Stunden auf einer Temperatur von +60°C gehalten, und anschließend wird die textile Unterlage durch Abziehen entfernt. Nach dem Abkühlen wird das Ausgangsmaterial zu Platten in einer Abmessung von ca. 30 cm ∗ 30 cm geschnitten. Diese Platten werden mit einem beliebigen feinporigen Schaumstoff mit einem Haftvermittler, der für die verschiedensten Kunststoffe geeignet ist, flächig verklebt und 10 min lang in einer hydraulischen Presse mit einer Anpreßkraft von 3000 N belastet. Der verwendete Kunststoff hat eine definierte Härte. Bei einem Durchmesser des Federelementes von 11,2 mm ergibt sich eine Oberflächengröße der Kollektorplatte von 1 cm². In Verbindung mit einer Gesamthöhe von 17,5 mm des Federelementes 4 wird eine Anpreßkraft von 5 N beim Zusammenpressen des Federelementes 4 mit der Kollektorplatte 1 bis zur Aufsetzebene 3 des Gehäuses 9 erreicht. Da die für das Federelement 4 verwendeten Schaumstoffe oder Elastomere auch bei gleichen Herstellerangaben häufig unterschiedliche Härten aufweisen, sollte Platte für Platte nach genauem Härtegrad und dem Federverhalten ausgewählt werden, um die Anpreßkräfte bei den Kollektoren gleichhalten zu können. Nachdem das Federelement 4 und die Kollektorplatte 1 verklebt und über 24 Stunden bei +35 °C getrocknet worden sind, wird die so gebildete Einheit mit einer Hohlfräse, die einen Innendurchmesser von 11,2 mm hat, mit genau diesen Abmessungen, insbesondere durch die Verwendung sehr scharfer Werkzeuge, ausgefräst.

Günstig ist es, die so hergestellten Einheiten nach verschiedenen Parametern einer Qualitätskontrolle zu unterziehen und auszuwählen. Dabei sollte insbesondere die Unversehrtheit der Kollektorplatte, deren Planlage und Klebkraft nach 10 Sekunden Andruck mit einer Anpreßkraft von 5 N an eine plane Platinfläche von 0,5 cm² geprüft werden, um gleichmäßige Bedingungen bei der Probenentnahme mit dem erfindungsgemäß ausgebildeten Kollektoren einhalten zu können. Die ausgewählten Teile werden dann im kapselförmigen Gehäuse mit einem Aralditkleber 6 mit dem unteren Teil des Gehäuses 9 verbunden und dabei mit einem Abstandsrohr definiert positioniert gehalten und über einen Zeitraum von 10 Stunden getrocknet. Die definierte Positionierung ist dabei wichtig, um den effektiven Federweg 7, der Einfluß auf die mögliche Anpreßkraft des Federelementes 4 hat, einhalten zu können.

Das kapselförmige Gehäuse ist hierbei zweiteilig ausgebildet, und eine auf das Kapselunterteil aufschraubbare Abdeckkappe 8 ist in der Figur erkennbar. Die Abdeckkappe 8 verfügt dabei über einen Aufnahmeraum für die Kollektorplatte 1 und das Federelement 4. Im Gehäuseunterteil 9 ist ein Ausdehnungsschacht 5 vorgesehen, in den hinein sich das Federelement 4 ausdehen kann, wenn die Kollektorplatte 1 gegen die zu bestimmende Oberfläche gepreßt wird. Der mögliche effektive Federweg 7 wird durch die Ausdehnung der aus Federelement 4 und Kollektorplatte 1 gebildeten Einheit über die als Aufsatzebene 3 ausgebildete Oberfläche des unteren Gehäuseteils 9 bestimmt. Dabei sollten die Aufsatzebene 3 und die Kollektorplatte 1 parallel zueinander ausgerichtet sein.

## Patentansprüche

1. Kollektor zur Abnahme von Mikroben, Partikeln, Fasern, Stäuben, Abrieb, Sphären und ähnlicher beliebiger Materialien von Oberflächen, bei dem eine Kollektorplatte (1) mit einem Federelement (4) in einem Gehäuse (9) aufgenommen ist,
**dadurch gekennzeichnet,**
daß die aus Kollektorplatte (1) und Federelement (4) gebildete Einheit, so dimensioniert ist, daß die zumindest an der Oberlfäche haftend wirkende Kollektorplatte (1), mit der haftenden Oberfläche über eine Aufsatzebene (3) des Gehäuses (9) hinausragt und der Abstand zwischen Kollektorplatte (1) und Aufsatzebene (3) einen definierten Federweg (7) vorgibt und bei Ausübung einer Andruck-Kraft, mit der die Kollektorplatte (1) gegen eine Oberfläche gedrückt wird, eine definierte Andruck-Kraft der Kollektorplatte (1) an die Oberfläche vorgegeben ist.

2. Kollektor nach Anspruch 1, dadurch gekennzeichnet, daß die Kollektorplatte (1) aus einem in seinem Materialgefüge ein Haftmittel speicherndes Material besteht, dessen Oberfläche vom Haftmittel benetzbar oder benetzt ist.

3. Kollektor nach Anspruch 1 und 2, dadurch gekennzeichnet, daß die Kollektorplatte (1) aus 10 bis 50 Gew.% Polyvinylchlorid besteht, in das 50 bis 90 Gew.% Haftmittel aufgenommen sind.

4. Kollektor nach einem der Ansprüche 1 bis 3, dadurch gekennzeichnet, daß das Haftmittel ein Plastifizierungsmittel für Polyvinylchlorid ist.

5. Kollektor nach einem der Ansprüche 3, dadurch gekennzeichnet, daß in dem Polyvinylchlorid viskosimetrische Modifikatoren wie Porzellanerde, feine Silikate, Aluminium-Stearat, Lithium-Stearat, hydriertes Rizinusöl enthalten sind.

6. Kollektor nach einem der Ansprüche 1 bis 5, dadurch gekennzeichnet, daß die Materialien der Kollektorplatte (1) mittels einer Wärmebehandlung verfestigt sind.

7. Kollektor nach Anspruch 1, dadurch gekennzeichnet, daß die Kollektorplatte (1) ein Gel, ein Agar, eine Knetmasse, ein Silikongummi oder eine Kunststoffplatte oder Folie ist, welche auch als Elektret ausgebildet sein kann.

8. Kollektor nach Anspruch 1, dadurch gekennzeichnet, daß die Haftwirkung der Kollektorplatte (1) durch Erzeugung eines elektrischen Feldes erreichbar ist.

9. Kollektor nach einem der Ansprüche 1 bis 8, dadurch gekennzeichnet, daß das aus einem Elastomer bestehende Federelement (4) im Gehäuse (9) aufgenommen ist und das Gehäuse (9) zumindest teilweise im Bereich des Federelementes (4) als Ausdehnungsschacht (5) für das Federelement (4) ausgebildet ist.

10. Kollektor nach einem der Ansprüche 1 bis 9, dadurch gekennzeichnet, daß zwischen Kollektorplatte (1) und Federelement (4) eine Sperrplatte (2) angeordnet ist.

11. Kollektor nach Anspruch 10, dadurch gekennzeichnet, daß die Sperrplatte (2) aus Polyurethan besteht.

12. Kollektor nach einem der Ansprüche 1 bis 11, dadurch gekennzeichnet, daß das Gehäuse (9) verschließbar ist und im verschlossenen Zustand Kollektorplatte (1) und Federelement (4) im Gehäuse (9) eingeschlossen sind.

13. Kollektor nach einem der Ansprüche 1 bis 12, dadurch gekennzeichnet, daß das Kollektorplattenmaterial dunkel eingefärbt ist.

## Claims

1. Collector for the removal of microbes, particles, fibres, dust particles, attrition, spheres and similar materials from surfaces, by which a collector plate (1) with a spring element (4) is accommodated in a casing, characterised in that the collector plate (1) and the spring element (4) form a unit which has such dimensions that the collector plate (1), which at least on the surface has an adhesive effect, protrudes over the kerb plane (3) of the casing (9); and the distance between the collector plate (1) and the kerb plane (3) predetermines a defined spring path (7); and by exercising a pressure force with which the collector plate (1) is pushed against a surface, a defined pressure force of the collector plate (1) onto the surface is predetermined.

2. Collector according to claim 1, characterised in that the collector plate (1) consists of a material structure of which one material component stores a bonding agent of which the surface is moistenable or is moistened.

3. Collector according to claim 1 and 2, characterised in that the collector plate (1) consists of 10 to 50 % by weight polyvinyl chloride, in which 50 to 90 % by weight bonding agents have been absorbed.

4. Collector according to one of claims 1 to 3, characterised in that the bonding agent is a plasticization agent for polyvinyl chloride.

5. Collector according to one of claims 3, characterised in that viscosimetrical modificators such as porcelain clay, fine silicas, aluminium stearate, lithium stearate, hydrogenated castor oil are included in the polyvinyl chloride.

6. Collector according to one of claims 1 to 5, characterised in that the materials are hardened on to the collector plate (1) by means of a heat treatment.

7. Collector according to claim 1, characterised in that the collector plate (1) is a gel, an agar, a modelling clay, a silicone rubber, or a plastic plate or foil, which can also be formed as an electret.

8. Collector according to claim 1, characterised in that the adhesive effect of the collector plate (1) is attainable by generating an electric field.

9. Collector according to one of claims 1 to 8, characterised in that the spring element (4), which consists of elastomer, is accommodated in the casing (9), and that the casing (9), at least partially in the proximity of the spring element (4), is formed as an expansion shaft (5) for the spring element (4).

10. Collector according to one of claims 1 to 9, characterised in that a barrier plate (2) is placed between the collector plate (1) and the spring element (4).

11. Collector according to claim 10, characterised in that the barrier plate (2) consists of polyurethane.

12. Collector according to one of claims 1 to 11, characterised in that the casing (9) can be closed and that in the closed condition, the collector plate (1) and the spring element (4) are trapped in the casing (9).

13. Collector according to one of claims 1 to 12, characterised in that the collector plate (1) material is dyed a dark colour.

## Revendications

1. Collecteur servant à enlever des surfaces microbes, particules, fibres, poussières, usure, sphères et tout autre matériau semblable où est placée une plaque de collecteur (1) munie d'un ressort (4) dans un boîtier (9), caractérisé par le fait que l'unité formée par la plaque de collecteur (1) et le ressort (4) est dimensionnée de façon à ce que la plaque de collecteur (1) produisant l'effet d'adhérer tout au moins à la surface dépasse avec la surface adhérente au-dessus d'un niveau de couvercle (3) du boîtier (9) et à ce que l'espace entre la plaque de collecteur (1) et le niveau de couvercle (3) fixe à l'avance une course de ressort définie et, en exerçant une force de pression avec laquelle la plaque de collecteur (1) est appuyée contre la surface, une force de pression de la plaque de collecteur (1) sur la surface est fixée à l'avance.

2. Le collecteur selon le revendication 1, caractérisé par le fait que la plaque de collecteur (1) est constituée d'un matériau qui stocke dans sa structure un agent adhésif et dont la surface est mouillable ou mouillée par l'agent adhésif.

3. Le collecteur selon le revendication 1 et 2, caractérisé par le fait que 10 à 50 % du poids de la plaque du collecteur (1 ) sont constitués de chlorure de polyvinyle dur dans lesquels 50 à 90 % d'agent adhésif sont stockés.

4. Le collecteur selon un des revendications 1 à 3, caractérisé par le fait que l'agent adhésif est un plastifiant pour chlorure de polyvinyle dur.

5. Le collecteur selon le revendication 3, caractérisé par le fait que dans le chlorure de polyvinyle dur sont contenus des modificateurs visco-symétriques tels que kaolin, silicates fins, stéarate d'aluminium, stéarate de lithium, huile de ricin hydrogénée.

6. La collecteur selon un des revendications 1 à 5, caractérisé par le fait que les matériaux de la plaque de collecteur (1) sont compactés à l'aide d'un traitement thermique.

7. Le collecteur selon le revendication 1, caractérisé par le fait que la plaque de collecteur (1) est constituée par un gel, un agar, une masse de malaxage, un caoutchouc silicone ou une plaque synthétique ou une feuille qui peut aussi être formée comme électrète.

8. Le collecteur selon le revendication 1, caractérisé par le fait que l'effet adhésif de la plaque de collecteur (1) est possible en produisant un champ électrique.

9. Le collecteur selon un des revendications 1 à 8, caractérisé par le fait que le ressort (4) constitué d'un élastomère est intégré dans le boîtier (9) et que le boîtier (9) est formé comme puits d'extension pour le ressort (4) tout au moins partiellement au niveau du ressort.

10. Le collecteur selon un des revendications 1 à 9, caractérisé par le fait qu'une plaque d'arrêt est placée entre la plaque de collecteur (1) et le ressort (4).

11. Le collecteur selon le revendication 10, caractérisé par le fait que la plaque d'arrêt (2) est constituée de polyuréthane.

12. Le collecteur selon un des revendications 1 à 11, caractérisé par le fait que le boîtier (9) est verrouillable et qu'en position verrouillée la plaque de collecteur (1) et le ressort (4) sont enfermés dans le boîtier (9).

13. Le collecteur selon un des revendications 1 à 12, caractérisé par le fait que le matériau de la plaque de collecteur est teinté dans une couleur sombre.
